# EUROPÄISCHE PATENTSCHRIFT

(11) **EP 3 248 297 B1**
(45) Veröffentlichungstag und Bekanntmachung des Hinweises auf die Patenterteilung: **17.07.2019**
(21) Anmeldenummer: 16711513.8
(22) Anmeldetag: 19.01.2016
(51) Int. Cl.: H04B 5/00, H02J 50/10, H02J 50/40, H02J 50/80

(54) **VERFAHREN DER INDUKTIVEN STROMÜBERTRAGUNG**
INDUCTIVE POWER TRANSMISSION METHOD
PROCÉDÉ DE TRANSMISSION INDUCTIVE DE COURANT

(30) Priorität: 23.01.2015 DE 102015000665
(43) Veröffentlichungstag der Anmeldung: 29.11.2017
(73) Patentinhaber: Witech GmbH, 33739 Bielefeld (DE)
(72) Erfinder: BÜKER, Maik-Julian, 33190 Paderborn (DE); EUSKIRCHEN, Jörg, Rainer, 33739 Bielefeld (DE); SCHMIDT, Marco, 33102Paderborn (DE)
(74) Vertreter: Bendele, Tanja
(86) Internationale Anmeldenummer: PCT/DE2016/000017
(87) Internationale Veröffentlichungsnummer: WO 2016/116091

(56) Entgegenhaltungen:
- WO-A2-2007/090168
- WO-A2-2012/099965

## Beschreibung

Die Erfindung betrifft ein Verfahren der induktiven Stromübertragung mittels eines wenigstens eine Sendespule aufweisenden Senders und einer wenigstens eine Empfängerspule aufweisenden Empfängers einer elektrisch betriebenen Vorrichtung wie eines Laptops, eines Smartphones, eines Tablets oder dergleichen.

Die induktive Stromübertragung für beispielsweise die Aufladung von Akkumulatoren für die Versorgung elektrischer Vorrichtungen ist vielfältig bekannt. So offenbart die EP 1 318 260 A2 die drahtlose Stromübertragung aus einem Festnetz an einen mit einem Torflügel bewegten Akkumulator.

Einen weiteren Verwendungszweck offenbart
DE 10 2010 047 579 A1. Dort wird ein flächenhaft sich erstreckendes Möbelbauteil offenbart, beispielsweise eine Tisch- oder Arbeitsplatte, in dem eine Vielzahl von Sendespulen für eine induktive Stromübertragung für eine elektrisch betriebene Vorrichtung wie insbesondere einen Laptop, ein Smartphone, ein Tablet oder dergleichen integriert ist.

Ziel ist dort, dass ein beliebig auf dem Möbelbauteil abgesetzter elektrischer Verbraucher eine Stromversorgung erfährt.

Verfahren der induktiven Leistungsübertragung an einen Verbraucher sind auch aus WO 2007/090168 A2 und WO 2012/099965 A2 bekannt.

Dieser Verbraucher, beispielsweise Laptops, Smartphones, Tablets oder dergleichen, werden in unterschiedliche Leistungsklassen der Stromaufnahme eingeordnet.

Aufgabe der vorliegenden Erfindung ist es, derartigen Geräten eine optimale Stromversorgung zukommen zu lassen und darüber hinaus, insbesondere bei einer Vielzahl von Sendespulen, die in einem vorzugsweise flächenhaft sich erstreckenden Möbelbauteil angeordnet sind, diejenige oder eine Gruppe von Sendespulen auszuwählen, die für eine optimale Stromversorgung geeignet sind. Darüber hinaus gilt es, bestehende Richtlinien für die Grenzwerte der von den Sendespulen jeweils übertragenen Leistung einzuhalten.

Gegenstand der Erfindung ist ein Verfahren gemäß Anspruch 1. Vorteilhafte Ausführungsformen finden sich in den abhängigen Ansprüchen.

Zunächst wird bei einem in Rede stehenden Verfahren der induktiven Stromübertragung gem. des Anspruchs 1 darauf abgestellt, dass in dem Sender eine Regelung für die zu übertragende Leistung vorgesehen ist, dass durch die Regelung mit Beginn einer Stromübertragung eine minimale Leistung von dem Sender übertragen wird, dass die minimale übertragende Leistung ausreichend bemessen ist, einen Controller des Empfängers der elektrisch betriebenen Vorrichtung zu aktivieren, worauf der Controller durch eine Beeinflussung des Feldes der Sendespule Informationen über die elektrisch betriebene Vorrichtung enthaltende Datenpakete an die Regelung liefert, woraufhin von dem Sender eine an die Leistungsklasse der Vorrichtung angepasste optimale Leistung übertragen wird.

Ein erster Vorteil des Verfahrens nach der Erfindung ist es, eine Regelung für die übertragende Leistung vorzusehen. Eine solche Regelung der Leistung kann stufenlos erfolgen, aber auch diskret. Die Regelung wird zwischen einer minimalen Leistung und einer maximalen Leistung erfolgen. Die minimale Leistung wird dabei derart bemessen sein, dass diese für kleine Geräte ausreichend ist, andererseits aber die Grenzwerte für eine induktive Stromübertragung von einer Sendespule eingehalten werden. Bei der vorliegenden Erfindung ist ein typischer, minimaler Wert der übertragenden Leistung 5 Watt.

Diese minimale Leistung ist allerdings auch ausreichend, einen Controller des Empfängers der elektrisch betriebenen Vorrichtung zu aktivieren. Dieser Controller interagiert nunmehr mit dem Sender. Durch eine Beeinflussung des Feldes der Sendespulen werden Informationen digital in Datenpaketen an die Regelung geliefert. Hierdurch erfährt beispielsweise der Sender die Leistungsklasse der elektrisch betriebenen Vorrichtung, so dass eine an diese Leistungsklasse der Vorrichtung angepasste optimale Leistung von der Sendespule übertragen wird.

Insbesondre wird daran gedacht sein, dass die Informationen der Regelung eine Identifikation der Vorrichtung und eine Einordnung der Vorrichtung in eine Leistungsklasse erlauben, dass von dem Sender eine auf die Leistungsklasse abgestimmte Leistung übertragen wird und dass in der Vorrichtung eine Feinregelung der Leistung erfolgt.

Durch die Identifikation wird sichergestellt, dass die Kommunikation und die Leistungsübertragung zwischen Sender und Empfänger gem. des erfindungsgemäßen Verfahrens erfolgen kann. Weiter können, bspw. bei diskreten Leistungsklassen, Zwischenwerte für eine optimale Versorgung notwendig werden. Solche Zwischenwerte werden dann nicht, wie üblich, durch eine unmittelbare Regelung der Senderleistung eingestellt, sondern es Erfolgt eine solche Feinregelung innerhalb der Vorrichtung.

Kommt es dabei, aber auch in andren Fällen, zu einem Überspannungsereignis, wird die übertragene Leistung um eine Leistungsklasse herabgesetzt. Daneben können selbstverständlich alle weiteren bekannten Schutzmaßnahmen getroffen werden.

Das Verfahren nach der Erfindung ist auch dann geeignet, wenn eine Vielzahl von Sendespulen vorgesehen ist. Eine Vielzahl von Sendespulen wird regelmäßig in sogenannten Arrays angeordnet sein, beispielsweise gem. US 7,576,514 B2.

Es versteht sich, dass für eine optimale Energieübertragung Sende- und Empfängerspule sich unmittelbar gegenüberliegen sollten.

Um dies weitestgehend sicherzustellen, wird erfindungsgemäß vorgesehen, dass durch die Regelung die Sendespulen jeweils nacheinander die minimale Leistung übertragen und dass die Regelung die Sendespule für die optimale Leistungsübertragung schaltet, bei der die Kopplung mit der Empfängerspule und/oder bei der die Beeinflussung ihres elektrischen Feldes am größten ist. Solches kann bspw. durch eine Überwachung der Leerlaufspannung der Sendespulen erfasst werden, wonach eine optimale Energieübertragung erfolgen kann.

Die US 7,576,514 B2 offenbart darüber hinaus, dass Sendespulenanordnungen auch in mehreren Ebenen und dann sich überlappend angeordnet sein können.

Zweckmäßigerweise wird dann nach der Erfindung vorgesehen sein, dass durch die Regelung die Sendespulen einer ersten Ebene jeweils nacheinander die minimale Leistung übertragen, dass durch die Regelung die überlappenden Sendespulen der nächsten Ebene jeweils nacheinander die minimale Leistung übertragen und dass die Regelung die Sendespule für die optimale Leistungsübertragung schaltet, bei der die Kopplung mit der Empfängerspule und/oder bei der die Beeinflussung ihres elektrischen Feldes am größten ist.

Sind größere elektrisch betriebene Vorrichtungen mit Strom zu versorgen, kann durch die Regelung neben einer einzelnen Spule auch eine Gruppe insbesondere benachbarter oder sich überlappender Spulen, wie voranstehend erläutert, geschaltet werden.

Die Position eines auf einer Arbeitsplatte, einem Konferenztisch oder dergleichen abgesetzten Laptops, Tablets oder einer ähnlichen elektrisch betriebenen Vorrichtung wird nicht dauerhaft sein. Räumliche Verschiebungen einer solchen Vorrichtung sind dann unproblematisch, wenn weiter vorgesehen wird, dass in vorgebbaren zeitlichen Intervallen die optimale Leistungsübertragung der geschalteten Sendespule unterbrochen wird und dass durch die Regelung nacheinander die der ehemals geschalteten Sendespule benachbarten Sendespulen und/oder die mit der ehemals geschalteten Sendespule überlappenden Sendespulen mit der minimalen Leistung beaufschlagt werden und dass die Regelung die Sendespule für die optimalen Leistungsübertragung schaltet, bei der die Kopplung mit der Empfängerspule und/oder bei der die Beeinflussung ihres elektrischen Feldes am größten ist.

Gerade bei der Nutzung des erfindungsgemäßen Verfahrens bei Konferenztischen, Arbeitstischen oder dergleichen, an denen sich Personen längere Zeit aufhalten, sollten Grenzwerte der induktiven Stromübertragung eingehalten werden. Solches ist vergleichsweise unproblematisch, wenn die zu versorgenden Geräte höherer Leistung eine ausreichend große Standfläche aufweisen, resp. eine ausreichend große Grundfläche der Empfängerspule, um sicher eine Sendespule oder zumindest einen großen Teil derselben abzudecken. Problematisch ist die Energieversorgung von elektrisch betriebenen Vorrichtungen vergleichsweise kleiner Grundfläche, die kleiner bemessen ist, als der Durchmesser einer Sendespule.

Es ist dann vorgesehen, dass die Datenpakete die Angabe der Grundfläche der Vorrichtung enthalten, woraufhin von dem Sender eine an die Grundfläche der elektrisch betriebenen Vorrichtung angepasste Leistung übertragen wird.

Hierdurch wird die Einhaltung von vorgegebenen Grenzwerten der induktiven Stromübertragung sichergestellt.

Alternativ oder zusätzlich kann vorgesehen sein, dass bei Vorrichtungen mit einer Empfängerspule, deren Grundfläche kleiner bemessen ist als die der Sendespule, die Grundfläche der elektrisch betriebenen Vorrichtung durch abschirmendes Material über das Maß der Sendespule hinaus vergrößert ist.

Als abschirmendes Material bieten sich insbesondere Ferrite beispielsweise an.

Für die Übertragung der Datenpakete bzw. deren Auswertung bedarf es einer Demodulation der Beeinflussung des Feldes der Sendespule, wobei die Beeinflussung bevorzugt eine kapazitive Modulation ist.

Ein hierzu notwendiger Demodulator wird in der Regel nicht sofort für eine Datenübertragung eingeschwungen sein. Vor diesem Hintergrund kann es zweckmäßig sein, dass der Übertragung des Datenpakets wenigstens eine Trainingssequenz vorausgeht. Infolge dieser Maßnahme wird ein sicheres Einschwingen des Demodulators sichergestellt.

Eine solche Trainingssequenz beinhaltet beispielsweise die Übermittlung der Zahl 1 oder einer Ziffernkombination. Die Anzahl der mit der Trainingssequenz übertragenen Pakete beträgt vorzugsweise zwischen einem und zehn Paketen.

Die Erfindung wird anhand der Zeichnung näher erläutert, in der lediglich schematisch Vorrichtungen für die Durchführung des Verfahrens dargestellt sind.

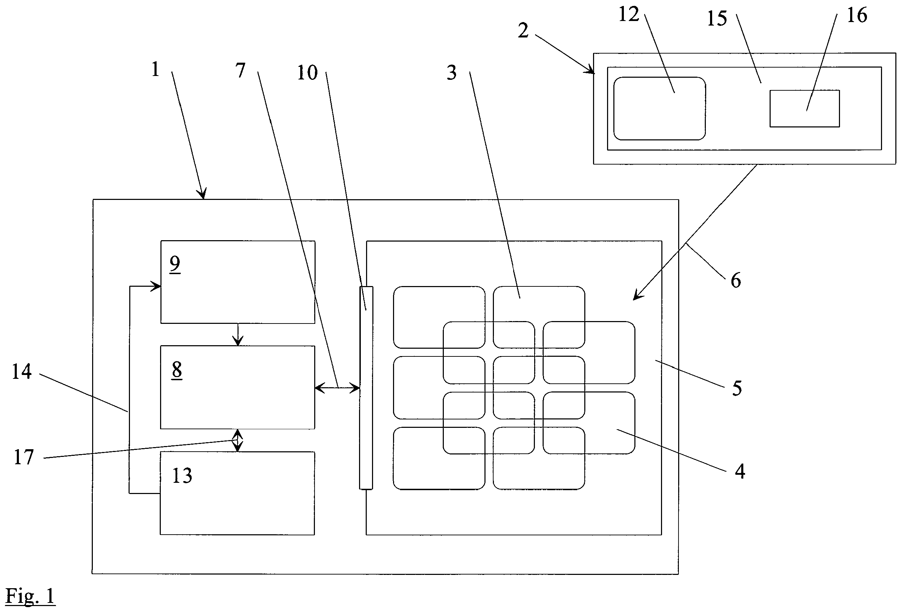

Die einzige Figur 1 zeigt einen Sender 1 und eine elektrisch betriebene Vorrichtung 2.

Der Sender 1 verfügt über eine Vielzahl lediglich angedeuteter Sendespulen 3,4, die in zwei Ebenen, oberseitig und unterseitig beispielsweise einer Platine 5, sich überlappend angeordnet sind. Eine derartige Spulenanordnung eignet sich vorzüglich für eine Integration in eine Arbeitsplatte, in eine Tischplatte eines Konferenztisches oder dergleichen, für die Stromversorgung gem. Pfeil 6 aufgesetzter, elektrisch betriebener Vorrichtungen 2.

Die Ansteuerung der einzelnen Sendespulen 3,4, ggf. auch eine gruppenweise Ansteuerung von Sendespulen 3,4, erfolgt gem. Doppelpfeil 7, in Fig. 1 nach rechts, durch eine von einem Mikrocontroller geschaltete Matrixansteuerung 8. Diese verteilt die von einer Leistungsstufe 9 gem. Pfeil 10 bereitgestellte Sendeenergie über eine weiter nicht dargestellte Verschaltung 11 auf eine einzelne Sendespule 3 oder 4 oder auf eine Gruppe von Sendespulen 3,4.

Für die induktive Stromübertragung weist die elektrisch betriebene Vorrichtung 2 eine entsprechende Empfängerspule 12 auf. Wird die Vorrichtung 2 gem. Pfeil 6 für eine induktive Stromübertragung oberhalb der Sendespulen 3,4 abgesetzt, wird die Leistungsstufe 9 durch eine von einem Mikrocontroller gesteuerte Regelung 13 gem. Pfeil 14 auf eine minimale Leistungsabgabe eingestellt.

Grundsätzlich erfolgt dann nacheinander die Beschaltung der Sendespulen 3,4 mit jeweils der minimalen Leistung. Diese minimale Leistungsabgabe ist ausreichend, um über die Empfängerspule 12 der Vorrichtung 2 mit zugehörigem Empfänger 15 einen Controller 16 zu aktivieren, durch den das Feld der Sendespulen 3,4 beeinflusst wird.

Mit der Beeinflussung einhergehend erfolgt eine Übertragung von Informationen über die elektrisch betriebene Vorrichtung 2 gem. Doppelpfeil 7, in Fig. 1 nach links, über die Matrixansteuerung 8 gem. Doppelpfeil 17 an die Regelung 13. Es kann damit der Sender 1 die Vorrichtung 2 identifizieren und insbesondere auch eine an die Leistungsklasse der Vorrichtung 2 angepasste optimale Leistung übertragen.

Sollten bspw. Zwischenwerte für eine optimale Versorgung notwendig werden, erfolgt eine solche Feinregelung innerhalb der Vorrichtung 2. Im Falle eines Überspannungsereignis, wird die übertragene Leistung um eine Leistungsklasse herabgesetzt.

Für eine optimale Leistungsübertragung werden durch die Regelung 13 gem. Doppelpfeil 17 über die Matrixansteuerung 8 die Sendespule 3,4 herangezogen werden, deren Kopplung mit der Empfängerspule 9 am größten ist.

Da bei dem Ausführungsbeispiel eine Vielzahl von Sendespulen 3,4 in zwei Ebenen vorgesehen ist, wird die Regelung 13 zunächst bspw. die Sendespulen 3 einer ersten Ebene jeweils nacheinander über die Matrixansteuerung 8 mit der von der Leistungsstufe 9 bereitgestellten minimalen Leistung beaufschlagen. Durch die Regelung 13 wird dann festgestellt, welche der Spulen 3 eine maximale Änderung des Feldes erfahren hat. Sie wird bevorzugt daraufhin nur die mit der Sendespule 3 der ersten Eben überlappenden Sendespulen 4 der nächsten Ebene über die Matrixansteuerung 8 mit der minimalen Leistung nochmals beaufschlagen, um dann aus den Spulen 3,4 der beiden Ebenen diejenige auszuwählen, bei der die Änderung des elektrischen Feldes am größten ist.

Ein solches Vorgehen kann auch auf Gruppen von Sendespulen übertragen werden, wenn die Empfängerspule 12 eine entsprechende flächenhafte Erstreckung aufweist.

Häufig wird jedoch die Grundfläche der Empfängerspule 12 vergleichsweise klein sein, häufig kleiner als die einer Sendespule 3,4. Die übertragenen Datenpakete werden dann Angaben der Grundfläche der Vorrichtung 2 enthalten, woraufhin von der Regelung 13 die Leistungsstufe 9 auf die minimale Leistungsabgabe geschaltet wird, die von der Matrixsteuerung 8 dann auf die angesprochene Sendespule 3,4 geschaltet wird. Es kann so eine maximal zulässige induktive Stromübertragung gewährleistet werden.

Für das Auslesen der Informationen bzw. des Status einer elektrisch betriebenen Vorrichtung 2 bedarf es einer Demodulation der Feldänderung einer Sendespule 3,4. Damit eine zeitlich vollständige Demodulation eines Datenpaketes sichergestellt ist, kann weiter vorgesehen sein, dass der Übertragung des Datenpakets die Übertragung einer Trainingssequenz vorangestellt wird.

## Patentansprüche

1. Verfahren der induktiven Stromübertragung mittels eines wenigstens eine Sendespule aufweisenden Senders und einer wenigstens eine Empfängerspule aufweisenden Empfängers einer elektrisch betriebenen Vorrichtung wie eines Laptops, eines Smartphones, eines Tablets oder dergleichen, wobei in dem Sender eine Regelung für die zu übertragende Leistung vorgesehen ist, dass durch die Regelung mit Beginn einer Stromübertragung eine minimale Leistung von dem Sender übertragen wird, dass die minimale übertragene Leistung ausreichend bemessen ist, einen Controller des Empfängers der elektrisch betriebenen Vorrichtung zu aktivieren, worauf der Controller durch eine Beeinflussung des Feldes der Sendespule Informationen über die elektrisch betriebene Vorrichtung enthaltende Datenpakete an die Regelung liefert, woraufhin von dem Sender eine an die Leistungsklasse der Vorrichtung angepasste optimale Leistung übertragen wird, wobei eine Vielzahl von Sendespulen vorgesehen ist und wobei durch die Regelung die Sendespulen jeweils nacheinander die minimale Leistung übertragen und die Regelung die Sendespule für die optimale Leistungsübertragung schaltet, bei der die Kopplung mit der Empfängerspule und/oder bei der die Beeinflussung ihres elektrischen Feldes am größten ist, wobei in vorgebbaren zeitlichen Intervallen die optimale Leistungsübertragung der geschalteten Sendespule unterbrochen wird und durch die Regelung nacheinander die der ehemals geschalteten Sendespule benachbarten Sendespulen mit der minimalen Leistung beaufschlagt werden und die Regelung die Sendespule für die optimalen Leistungsübertragung schaltet, bei der die Kopplung mit der Empfängerspule und/oder bei der die Beeinflussung ihres elektrischen Feldes am größten ist, **dadurch gekennzeichnet, dass** ausschließlich in der elektrisch betriebenen Vorrichtung eine Feinregelung der Leistung erfolgt, wenn Zwischenwerte von diskreten Leistungsklassen erforderlich sind.

2. Verfahren nach Anspruch 1, **dadurch gekennzeichnet, dass** die Informationen der Regelung eine Identifikation der Vorrichtung und eine Einordnung der Vorrichtung in eine Leistungsklasse erlauben.

3. Verfahren nach einem oder mehreren der vorangehenden Ansprüche, **dadurch gekennzeichnet, dass** bei Auftreten einer Überspannung die übertragene Leistung um eine Leistungsklasse herabgesetzt wird.

4. Verfahren nach einem oder mehreren der vorangehenden Ansprüche, bei dem Spulen in mehreren Ebenen überlappend angeordnet sind, **dadurch gekennzeichnet, dass** durch die Regelung die Sendespulen einer ersten Ebene jeweils nacheinander die minimale Leistung übertragen, dass durch die Regelung die überlappenden Sendespulen der nächsten Ebene jeweils nacheinander die minimale Leistung übertragen und dass die Regelung die Sendespule für die optimale Leistungsübertragung schaltet, bei der die Kopplung mit der Empfängerspule und/oder bei der die Beeinflussung ihres elektrischen Feldes am größten ist.

5. Verfahren nach Anspruch 4, **dadurch gekennzeichnet, dass** in vorgebbaren zeitlichen Intervallen die optimale Leistungsübertragung der geschalteten Sendespule unterbrochen wird und dass durch die Regelung nacheinander die mit der ehemals geschalteten Sendespule überlappenden Sendespulen mit der minimalen Leistung beaufschlagt werden und dass die Regelung die Sendespule für die optimalen Leistungsübertragung schaltet, bei der die Kopplung mit der Empfängerspule und/oder bei der die Beeinflussung ihres elektrischen Feldes am größten ist.

6. Verfahren nach einem oder mehreren der vorangehenden Ansprüche, **dadurch gekennzeichnet, dass** eine Gruppe von Sendespulen geschaltet wird.

7. Verfahren nach einem oder mehreren der vorangehenden Ansprüche, **dadurch gekennzeichnet, dass** die Datenpakete die Angabe der Grundfläche der Vorrichtung enthalten, woraufhin von dem Sender eine an die Grundfläche der elektrisch betriebenen Vorrichtung angepasste Leistung übertragen wird.

8. Verfahren nach einem oder mehreren der vorangehenden Ansprüche, **dadurch gekennzeichnet, dass** bei Vorrichtungen mit einer Empfängerspule, deren Grundfläche kleiner bemessen ist als die der Sendespule, die Grundfläche der elektrisch betriebenen Vorrichtung durch abschirmendes Material über das Maß der Sendespule hinaus vergrößert ist.

9. Verfahren nach einem oder mehreren der vorangehenden Ansprüche, **dadurch gekennzeichnet, dass** einer Übertragung eines Datenpakets wenigstens eine Trainingssequenz vorausgeht.

## Claims

1. Method of inductive current transmission by means of a transmitter having at least one transmitter coil and of a receiver having at least one receiver coil of an electrically operated device, such as of a laptop, a smartphone, a tablet or the like, a control for the power to be transmitted being provided in the transmitter that the transmitter transmits a minimal power at the start of a current transmission, by the control, that the minimal, transmitted power is sufficiently assessed to activate a controller of the receiver of the electrically operated device, whereupon the controller provides the control with data packets containing information on the electrically operated device by an influence on the field of the transmitter coil, whereupon the transmitter transmits an optimal power adapted to the power class of the device, a plurality of transmitter coils being provided, and the transmitter coils transmitting one after another the minimum power, by the control, and the control switching the transmitter coil for the optimal power transmission, in case of which the coupling with the receiver coil and/or in case of which the influence on its electrical field is greatest, the optimal power transmission of the switched transmitter coil being interrupted at predeterminable time intervals and the minimum power being supplied one after another to the transmitter coils adjacent to the formerly switched coil, by the control, and the control switching the transmitter coil for the optimal power transmission, in case of which the coupling with the receiver coil and/or in case of which the influence on its electrical field is greatest, **characterised in that** a fine control of the power is carried out in the electrically operated device exclusively if intermediate values of discrete power classes are required.

2. Method according to claim 1, **characterised in that** the information allows the control to identify the device and to classify the device into a power class.

3. Method according to one or more of the preceding claims **characterised in that**, in case of an overvoltage, the transmitted power is reduced by a power class.

4. Method according to one or more of the preceding claims, in which coils are arranged in several planes in overlapping manner, **characterised in that** the transmitter coils of the first plane transmit one after another the minimum power, by the control, and that the overlapping transmitter coils of the next plane transmit one after another the minimum power, by the control, and that the control switches the transmitter coil for the optimal power transmission, in case of which the coupling with the receiver coil and/or in case of which the influence on its electrical field is greatest.

5. Method according to claim 4, **characterised in that** the optimal power transmission of the switched transmitter coil is interrupted at predeterminable time intervals, and that the minimum power is supplied one after another to the transmitter coils overlapping with the formerly switched transmitter coil, by the control, and that the control switches the transmitter coil for the optimal power transmission, in case of which the coupling with the receiver coil and/or in case of which the influence on its electrical field is greatest.

6. Method according to one or more of the preceding claims, **characterised in that** a group of transmitter coils is switched.

7. Method according to one or more of the preceding claims, **characterised in that** the data packets contain the indication of the base area of the device, whereupon the transmitter transmits a power adapted to the base area of the electrically operated device.

8. Method according to one or more of the preceding claims, **characterised in that**, in case of devices having a receiver coil, the base area of which is smaller than those of the transmitter coil, the base area of the electrically operated device is enlarged by shielding material beyond the extend of the transmitter coil.

9. Method according to one or more of the preceding claims, **characterised in that** at least one training sequence precedes a transmission of a data packet.

## Revendications

1. Procédé de la transmission de courant inductive au moyen d'un émetteur ayant au moins une bobine émettrice et d'un récepteur ayant au moins une bobine réceptrice d'un dispositif à fonctionnement électrique, tel que d'un portable, un smartphone, une tablette ou d'autres choses semblables, une commande pour la puissance à être transmise étant fournie dans l'émetteur que l'émetteur transmet une puissance minimale au début de la transmission de courant, par la commande, que la puissance minimale transmise est évaluée suffisamment pour activer un contrôleur du récepteur du dispositif à fonctionnement électrique, à la suite de quoi le contrôleur fournit la commande avec des paquets de données contenant des informations au dispositif à fonctionnement électrique par une influence au champ de la bobine émettrice, à la suite de quoi l'émetteur transmet une puissance optimale adaptée à la classe de puissance du dispositif, une pluralité des bobines émettrices étant fournies, et les bobines émettrices transmettant l'un après l'autre la puissance minimale, par la commande, et la commande commutant la bobine émettrice pour la transmission de puissance optimale, en cas de laquelle le couplage avec la bobine réceptrice et/ou en cas de laquelle l'influence à son champ électrique est le plus grand, la transmission de puissance optimale de la bobine émettrice commutée étant interrompue à des intervalles de temps prédéterminables et la puissance minimale étant fournie l'un après l'autre aux bobines émettrices adjacentes à la bobine émettrice anciennement commutée, par la commande, et la commande commutant la bobine émettrice pour la transmission de puissance optimale, en cas de laquelle le couplage avec la bobine réceptrice et/ou en cas de laquelle l'influence à son champ électrique est le plus grand, **caractérisé en ce qu'**un contrôle fin de la puissance est effectué dans le dispositif à fonctionnement électrique exclusivement lorsque les valeurs intermédiaires des classes de puissance discrètes sont requises.

2. Procédé selon la revendication 1, **caractérisé en ce que** les informations permettent à la commande d'identifier le dispositif et de classer le dispositif dans une classe de puissance.

3. Procédé selon l'une ou plusieurs des revendications précédentes, **caractérisé en ce que**, en cas d'une surtension, la puissance transmise est réduite d'une classe de puissance.

4. Procédé selon l'une ou plusieurs des revendications précédentes, dont des bobines sont arrangées en plusieurs plans à manière chevauchante, **caractérise en ce que** les bobines émettrices du premier plan transmettent l'un après l'autre la puissance minimale, par la commande, et que les bobines émettrices du plan prochain transmettent l'un après l'autre la puissance minimale, par la commande, et que la commande commute la bobine émettrice pour la transmission de puissance optimale, en cas de laquelle le couplage avec la bobine réceptrice et/ou en cas de laquelle l'influence à son champ électrique est le plus grand.

5. Procédé selon la revendication 4, **caractérisé en ce que** la transmission de puissance optimale de la bobine émettrice commutée est interrompue à des intervalles de temps prédéterminables, et que la puissance minimale est fournie l'un après l'autre aux bobines émettrices chevauchant avec la bobine émettrice anciennement commutée, par la commande, et que la commande commute la bobine émettrice pour la transmission de puissance optimale, en cas de laquelle le couplage avec la bobine réceptrice et/ou en cas de laquelle l'influence à son champ électrique est le plus grand.

6. Procédé selon l'une ou plusieurs des revendications précédentes, **caractérisé en ce qu'**une groupe de bobines émettrices est commutée.

7. Procédé selon l'une ou plusieurs des revendications précédentes, **caractérisé en ce que** les paquets de données contiennent l'indication de la superficie de base du dispositif, à la suite de quoi l'émetteur transmet une puissance adaptée à la superficie de base du dispositif à fonctionnement électrique.

8. Procédé selon l'une ou plusieurs des revendications précédentes, **caractérisé en ce que**, en cas des dispositifs ayant une bobine réceptrice, dont la superficie est inférieure que ceux de la bobine émettrice, la superficie de base du dispositif à fonctionnement électrique est élargie par un matériau de blindage au-delà de la mesure de la bobine émettrice.

9. Procédé selon l'une ou plusieurs des revendications précédentes, **caractérisé en ce qu'**au moins une séquence d'apprentissage précède une transmission d'un paque de données.
